# DEMANDE DE BREVET EUROPEEN

(11) **EP 1 352 783 A1**
(43) Date de publication de la demande: **15.10.2003**
(21) Numéro de dépôt: 03290858.4
(22) Date de dépôt: 07.04.2003
(51) Int. Cl.: B60Q 1/52, G08G 1/16

(54) **Procédé d'assistance au pilotage d'un véhicule automobile, et interface homme-machine pour sa mise en oeuvre**

(30) Priorité: 09.04.2002 FR 0204407
(71) Demandeur: Peugeot Citroen Automobiles SA, 78140 Vélizy Villacoublay (FR)
(72) Inventeur: Lefranc, Francis, 92150 Suresnes (FR)
(74) Mandataire: Thinat, Michel

(57) **Abrégé**

L'invention concerne notamment une interface homme - machine pour le pilotage d'un véhicule automobile, comprenant un combinateur (1, P11) susceptible d'actionnement de la part du conducteur, et un circuit de commande (2) délivrant un signal d'alimentation (Sv) en fonction au moins d'une condition d'état (E1).

L'interface selon l'invention comprend en outre un vibreur (3) fixé au combinateur (1, P11), et le signal d'alimentation (Sv), destiné à faire fonctionner le vibreur (3), est délivré à ce dernier au plus tard à l'instant d'actionnement du combinateur (1, P11) lorsque la condition d'état (E1) est réalisée.

## Description

La présente invention concerne, de façon générale, la sécurisation des véhicules automobiles.

Plus précisément, l'invention concerne, selon un premier de ses aspects, un procédé d'assistance au pilotage d'un véhicule automobile, comprenant une procédure de scrutation consistant à recueillir des commandes de pilotage émises par le conducteur du véhicule au moyen de dispositifs de pilotage, et une procédure d'évaluation consistant à évaluer un vecteur d'état en fonction au moins de signaux d'information et des commandes de pilotage émises par le conducteur, ce vecteur d'état étant au moins représentatif de conditions de roulement du véhicule.

Les procédés répondant à cette définition forment une classe très large de procédés utilisés pour augmenter la sécurité dynamique des véhicules automobiles, et dans lesquels les signaux d'information sont issus de différents capteurs dont ces véhicules sont équipés.

En général, les procédés appartenant à cette classe incluent une procédure de prévention qui consiste à ne prendre en compte les commandes de pilotage émises par le conducteur que dans la mesure où ces commandes ne mettent pas en péril la sécurité du véhicule et de ses occupants.

Par exemple, dans le cas d'un procédé destiné à éviter le blocage des roues, qui appartient à la classe générale de procédés telle que définie précédemment, la procédure de scrutation inclut la prise en compte de la commande de pilotage que représente l'enfoncement de la pédale de frein par le conducteur, la procédure d'évaluation inclut une estimation du glissement des roues freinées par rapport à la voie de roulement, et la procédure de prévention, qui est mise en oeuvre lorsque les conditions d'adhérence des roues sur la voie sont insuffisantes compte tenu de l'intensité du freinage, consiste à moduler le couple de freinage pour éviter une perte de contrôle directionnel du véhicule qui résulterait d'un blocage des roues.

Le pilotage d'un véhicule restant un processus très complexe, le conducteur doit néanmoins, en de multiples occasions, conserver une totale autonomie de jugement, de sorte qu'il n'est pas toujours possible de prévoir une procédure de prévention opérant un contrôle direct des paramètres de roulement du véhicule.

Dans ce contexte, la présente invention a pour but, selon un premier de ses aspects, de proposer un procédé d'assistance au pilotage d'un véhicule automobile, permettant d'accroître la sécurité de roulement d'un véhicule en dépit de cette difficulté.

A cette fin, le procédé de l'invention, par ailleurs conforme à la définition générique qu'en donne le préambule ci-dessus, est essentiellement caractérisé en ce qu'il comprend, en plus des procédures de scrutation et d'évaluation précédemment mentionnées, une procédure de prévention consistant à transmettre au conducteur, par l'intermédiaire d'un dispositif de pilotage actionné ou sur le point d'être actionné, un stimulus tactile, tel qu'une vibration, en réponse à la détection d'une altération imminente des conditions de roulement liée à la commande de pilotage émise par le conducteur au moyen de ce dispositif de pilotage.

Selon un second de ses aspects, l'invention concerne une interface homme - machine pour le pilotage d'un véhicule automobile, comprenant un dispositif de pilotage, tel qu'un élément de combinateur, sensible à un actionnement de la part du conducteur du véhicule, et un circuit de commande délivrant un signal d'alimentation en fonction au moins d'une première condition d'état, cette interface étant caractérisée en ce qu'elle comprend en outre un vibreur fixé au dispositif de pilotage, en ce que le signal d'alimentation est sélectivement délivré au vibreur, qui est mis en marche à réception du signal d'alimentation, et en ce que ce signal d'alimentation est délivré au vibreur au plus tard en réponse à l'apparition d'une concomitance entre un actionnement du dispositif de pilotage et la première condition d'état.

Si par exemple le conducteur du véhicule considéré manifeste sa volonté d'opérer un dépassement en actionnant la commande correspondante de feu clignotant, alors qu'un autre véhicule s'apprête lui-même à dépasser le véhicule considéré, ce qui constitue pour ce dernier une condition d'état de sécurité précaire, le danger que représente cette situation est signalé au conducteur du véhicule par une vibration de la commande de feu clignotant.

Grâce à cet agencement, non seulement il est possible d'alerter le conducteur sur l'existence d'une anomalie ou d'un danger dont il doit se garder, mais il est en outre possible d'atteindre ce résultat sans déranger les autres occupants du véhicule.

De préférence, l'interface homme - machine de l'invention comprend en outre au moins un capteur de proximité monté sur le dispositif de pilotage et délivrant au circuit de commande un signal d'information en réponse à la détection d'une condition de proximité de la main du conducteur par rapport à ce dispositif de pilotage, le signal d'alimentation étant délivré par le circuit de commande en réponse à une concomitance entre le signal d'information et la première condition d'état.

Dans ce cas, le capteur de proximité détecte avantageusement la condition de proximité de la main du conducteur par rapport au dispositif de pilotage au plus tard lorsque la main du conducteur touche ce dispositif de pilotage.

Selon un mode de réalisation de l'invention facile à mettre en oeuvre, le capteur de proximité est constitué par un capteur capacitif, le vibreur pouvant quant à lui comprendre un moteur électrique doté d'un arbre moteur, et une masselotte montée en balourd sur l'arbre moteur.

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue schématique d'une interface homme - machine conforme à l'invention; et
- la Figure 2 est une vue schématique agrandie d'un vibreur utilisable dans l'interface illustrée à la figure 1.

Comme indiqué précédemment, l'invention concerne notamment un procédé d'assistance au pilotage d'un véhicule automobile.

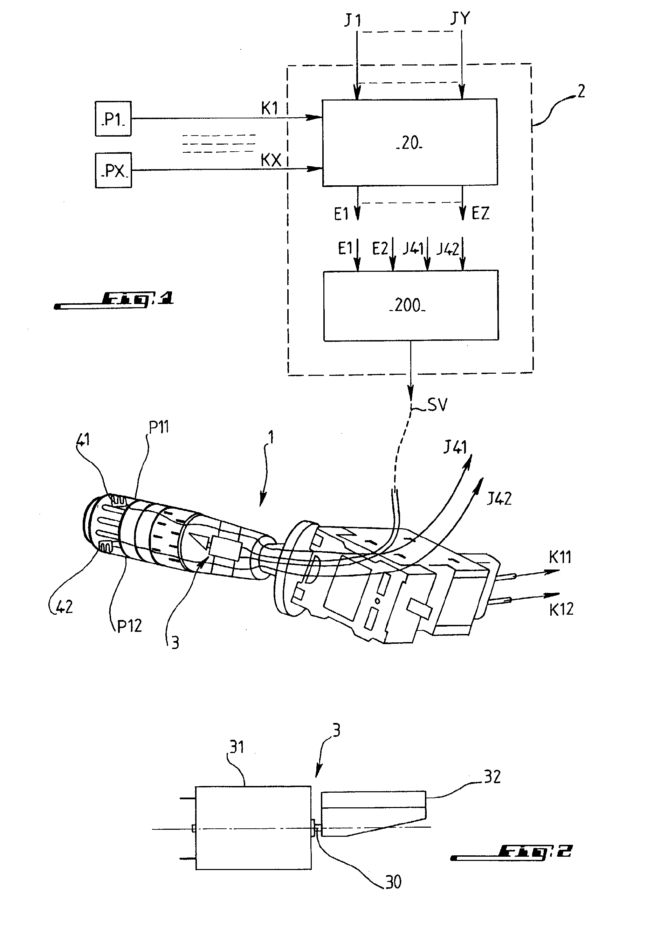

Ce procédé, qui sera exposé en référence à la figure 1, comprend au moins une procédure de scrutation, une procédure d'évaluation, et une procédure de prévention, les aspects innovants du procédé se concentrant dans cette dernière procédure.

La procédure de scrutation consiste à recueillir des commandes de pilotage, telles que K1 à Kx, que le conducteur du véhicule émet en actionnant des dispositifs de pilotage, tels que P1 à Px.

En fait, l'invention peut être mise en oeuvre par l'intermédiaire d'un seul dispositif de pilotage, élaborant une unique commande de pilotage.

Concrètement, cependant, la procédure de scrutation opérée sur tout véhicule automobile moderne implique une multitude de dispositifs de pilotage, à savoir non seulement les dispositifs principaux, tels que le volant, l'accélérateur, l'embrayage ou le frein, mais aussi les dispositifs annexes, tels que les interrupteurs d'éclairage, les clignotants droit et gauche, et l'avertisseur sonore.

La procédure d'évaluation consiste à évaluer en permanence un vecteur d'état, de composantes telles que E1 à Ez, qui donne une image plus ou moins complète de l'ensemble des conditions de roulement du véhicule et qui tient généralement compte non seulement de l'état du véhicule lui-même (régime moteur par exemple), mais également de son environnement (température externe par exemple), et aussi des relations entre le véhicule et son environnement immédiat et instantané (adhérence des roues au sol, traversée d'une zone de limitation de vitesse, présence de véhicules environnants, etc.).

De façon connue, ce vecteur d'état est élaboré à partir de signaux d'information, tels que J1 à Jy, issus de différents capteurs dont le véhicule est équipé, et des commandes de pilotage, telles que K1 à Kx, émises par le conducteur.

Dans ce contexte général connu, le procédé de l'invention comprend en outre une procédure de prévention particulière, mise en oeuvre de façon conditionnelle, et consistant à transmettre un stimulus tactile au conducteur.

Plus précisément, cette procédure de prévention est mise en oeuvre dans le cas où l'actionnement, en cours ou imminent, d'un dispositif de pilotage, tel qu'un interrupteur de feu clignotant P11 monté sur un combinateur 1 (souvent désigné par l'homme de métier sous le terme de "commodo", par référence à une marque déposée), apparaît dans une situation de roulement telle que cet actionnement produit ou annonce une altération imminente des conditions de roulement, ou le risque d'une telle altération.

Et cette procédure de prévention est mise en oeuvre en transmettant au conducteur un stimulus tactile, tel qu'une vibration, par l'intermédiaire du dispositif de pilotage P11 qui est en cours d'actionnement ou sur le point d'être actionné, annonçant ainsi immédiatement au conducteur l'existence d'une situation requérant toute sa vigilance, sans pour autant perturber les autres passagers du véhicule.

Si par exemple le véhicule circule en zone urbaine, cette situation de roulement se manifestant par une certaine composante Ez du vecteur d'état, et si le conducteur tente d'émettre, par un dispositif annexe de pilotage Px, une commande Kx de passage en mode plein phares alors que ce mode est interdit dans ces circonstances de roulement, la procédure de prévention transmettra, par l'intermédiaire du dispositif Px, un stimulus tactile au conducteur qui sera ainsi informé de l'anomalie que recèle sa manoeuvre.

Le procédé de l'invention est mis en oeuvre par une interface homme - machine telle qu'illustrée à titre d'exemple par la figure 1, sur laquelle sont notamment représentés un combinateur 1, un circuit de commande 2, et un vibreur 3.

Le combinateur 1 comprend plusieurs éléments tels, par exemple, que deux interrupteurs de feux clignotants, P11 et P12, susceptibles d'être actionnés par la main du conducteur, respectivement par abaissement et par soulèvement du combinateur 1.

L'actionnement du dispositif P11 produit une commande K11 et l'actionnement du dispositif P12 produit une commande K12.

Le circuit de commande 2 est par exemple constitué par un ensemble comprenant au moins une unité logique 20 élaborant un vecteur d'état, et un circuit de puissance 200 au moins partiellement piloté par l'unité logique 20, ce circuit de commande 2 étant notamment apte à délivrer, dans certaines conditions, un signal d'alimentation Sv.

Le vibreur 3 est fixé au dispositif de pilotage P11 et par exemple logé dans le combinateur 1.

Comme le montre la figure 2, le vibreur 3 peut être constitué par un moteur électrique 31 doté d'un arbre moteur 30, et par une masselotte 32 montée en balourd sur l'arbre moteur 30.

Ce vibreur est relié au circuit de commande 2 pour pouvoir être mis en fonctionnement par le signal d'alimentation Sv, à réception de ce dernier.

Lorsque le vecteur d'état fait apparaître une première condition d'état E1, traduisant par exemple le fait que le véhicule considéré est sur le point d'être dépassé par un autre véhicule, et si le conducteur actionne ou s'apprête à actionner l'interrupteur de feu clignotant, manifestant ainsi sa volonté d'opérer lui-même un dépassement, le circuit de commande 2 délivre le signal d'alimentation Sv au vibreur 3, dont la mise en marche alerte le conducteur sur le risque de collision qui résulterait d'une changement de file immédiat.

Dans l'hypothèse où le conducteur respecte le code de la route et met en marche le feu clignotant avant de changer de file, le signal d'alimentation Sv peut être délivré par le circuit de commande 2 à l'instant où apparaît la commande K11 qui traduit l'actionnement de l'interrupteur P11, dans le cas où la première condition d'état E1 est réalisée, c'est-à-dire alors que le véhicule considéré est sur le point d'être dépassé par un autre véhicule.

Néanmoins, il peut être avantageux de transmettre le stimulus tactile au conducteur le plus tôt possible.

Pour ce faire, l'interface homme - machine de l'invention peut comprendre un capteur de proximité, tel que 41, monté sur le dispositif de pilotage, par exemple sur l'élément P11 du combinateur 1, et délivrant au circuit de commande 2 un signal d'information tel que J41 avant même que ne soit produit le signal de commande K11 résultant de l'actionnement de ce dispositif de pilotage P11.

Le capteur de proximité 41 peut ainsi être constitué par un capteur capacitif, propre à détecter que la main du conducteur s'approche ou touche le dispositif de pilotage P11, avant même que le mouvement de la main du conducteur n'ait produit un actionnement de ce dispositif P11.

Comme le montre la figure 1, un capteur de proximité 42 peut être monté sur le combinateur 1 pour détecter l'imminence d'un actionnement du dispositif de pilotage P12 commandant le feu clignotant du côté droit du véhicule, d'autres capteurs de proximité pouvant encore être montés sur le combinateur 1 pour détecter une imminence d'actionnement d'autres dispositifs de pilotage portés par ce combinateur, par exemple ceux qui sont dédiés au contrôle du mode de fonctionnement des phares.

Enfin, comme le comprendra aisément l'homme de métier à la lecture de la description ci-dessus, la référence à la détection de la proximité de la main du conducteur doit s'entendre comme incluant la détection de la proximité de toute partie du corps que le conducteur peut utiliser pour opérer l'actionnement d'un dispositif de pilotage, et par exemple le pied dans le cas où ce dispositif est constitué par une pédale, l'application à un combinateur restant néanmoins une application particulièrement avantageuse de l'invention.

## Revendications

1. Procédé d'assistance au pilotage d'un véhicule automobile, comprenant une procédure de scrutation consistant à recueillir des commandes de pilotage (K1 à Kx) émises par le conducteur du véhicule au moyen de dispositifs de pilotage (P1 à Px), et une procédure d'évaluation consistant à évaluer un vecteur d'état (E1 à Ez) en fonction au moins de signaux d'information (J1 à Jy) et des commandes de pilotage (K1 à Kx) émises par le conducteur, ce vecteur d'état (E1 à Ez) étant au moins représentatif de conditions de roulement du véhicule, **caractérisé en ce qu'**il comprend en outre une procédure de prévention consistant à transmettre au conducteur, par l'intermédiaire d'un dispositif de pilotage (P11) actionné ou sur le point d'être actionné, un stimulus tactile, tel qu'une vibration, en réponse à la détection d'une altération imminente des conditions de roulement liée à la commande de pilotage (K11) émise par le conducteur au moyen de ce dispositif de pilotage (P11).

2. Interface homme - machine pour le pilotage d'un véhicule automobile, comprenant un dispositif de pilotage (P11), tel qu'un élément de combinateur (1), sensible à un actionnement de la part du conducteur du véhicule, et un circuit de commande (2) délivrant un signal d'alimentation (Sv) en fonction au moins d'une première condition d'état (E1), **caractérisée en ce qu'**elle comprend en outre un vibreur (3) fixé au dispositif de pilotage (P11), **en ce que** le signal d'alimentation (Sv) est sélectivement délivré au vibreur (3), qui est mis en marche à réception du signal d'alimentation (Sv), et **en ce que** ce signal d'alimentation (Sv) est délivré au vibreur (3) au plus tard en réponse à l'apparition d'une concomitance entre un actionnement du dispositif de pilotage (P11) et la première condition d'état (E1).

3. Interface homme - machine suivant la revendication 2, **caractérisée en ce qu'**elle comprend en outre au moins un capteur de proximité (41) monté sur le dispositif de pilotage (P11) et délivrant au circuit de commande (2) un signal d'information (J41) en réponse à la détection d'une condition de proximité de la main du conducteur par rapport à ce dispositif de pilotage (P11), et **en ce que** le signal d'alimentation (Sv) est délivré par le circuit de commande (2) en réponse à une concomitance entre le signal d'information (J41) et la première condition d'état (E1).

4. Interface homme - machine suivant la revendication 3, **caractérisée en ce que** le capteur de proximité (41) détecte la condition de proximité de la main du conducteur par rapport au dispositif de pilotage (P11) au plus tard lorsque la main du conducteur touche ce dispositif de pilotage (P11).

5. Interface homme - machine pour le pilotage suivant l'une quelconque des revendications 3 et 4, **caractérisée en ce que** le capteur de proximité (41) est constitué par un capteur capacitif.

6. Interface homme - machine pour le pilotage suivant l'une quelconque des revendications 2 à 5, **caractérisée en ce que** le vibreur (3) comprend un moteur électrique (31) doté d'un arbre moteur (30), et une masselotte (32) montée en balourd sur l'arbre moteur (30).
